# EUROPÄISCHE PATENTANMELDUNG

(11) **EP 2 996 224 A2**
(43) Veröffentlichungstag der Anmeldung: **16.03.2016**
(21) Anmeldenummer: 15185264.7
(22) Anmeldetag: 15.09.2015
(51) Int. Cl.: H02K 1/22, H02K 1/18, H02K 11/00, H02K 1/27, H02K 7/00

(54) **ELEKTROMOTOR MIT ROTIERBAR ANGEORDNETEM MASCHINENELEMENT**

(30) Priorität: 15.09.2014 DE 202014104371 U; 02.10.2014 DE 202014104749 U
(71) Anmelder: Elektrosil Systeme der Elektronik GmbH, 22761 Hamburg (DE)
(72) Erfinder: Niemann, Hendrik, 21224 Rosengarten (DE)
(74) Vertreter: RGTH

(57) **Zusammenfassung**

Um einen Elektromotor mit einem Stator, einem Rotor und einem mittels des Rotors rotierbar angeordneten ersten Maschinenelements zur Betätigung eines zweiten Maschinenelements besonders zuverlässig auszugestalten und gleichzeitig eine möglichst einfache und kostengünstige Serienfertigung zu ermöglichen, wird vorgeschlagen, dass der Elektromotor eine separate Statoraufnahme zur Aufnahme des Stators und eine separate Rotoraufnahme zur Aufnahme des Rotors aufweist.

## Beschreibung

Die Erfindung betrifft einen Elektromotor mit einem Stator und einem Rotor sowie einem mittels des Rotors rotierbar angeordnetem ersten Maschinenelement zur Betätigung eines zweiten Maschinenelements.

### Stand der Technik

Elektromotoren sind im Stand der Technik bekannt. Mittels eines Elektromotors wird elektrische Energie in mechanische Energie umgewandelt. In Elektromotoren wird die Kraft, die von einem Magnetfeld auf die stromdurchflossenen Leiter einer Spule ausgeübt wird, in Bewegung umgesetzt. Elektromotoren erzeugen meist rotierende Bewegungen, sie können aber auch translatorische Bewegungen ausführen. Elektromotoren werden zum Antrieb verschiedener Arbeitsmaschinen und Fahrzeuge eingesetzt. Üblich sind beispielsweise Gleichstrommotoren oder Wechsel- und Drehstrommotoren. Elektromotoren können beispielsweise eine Außenläufer- oder Innenläufer-Bauform aufweisen. Ferner ist bekannt, Elektromotoren als Schrittmotor zu verwenden. Dabei kann der Rotor durch ein gesteuertes, schrittweise rotierendes, elektromagnetisches Feld der Statorspulen um einen minimalen Winkel oder sein Vielfaches gedreht werden. Typische Anwendungsgebiete für Schrittmotoren sind beispielsweise Drucker sowie auch computergesteuerte Werkzeugmaschinen.

### Darstellung der Erfindung: Aufgabe, Lösung, Vorteile

Aufgabe der vorliegenden Erfindung ist es, einen Elektromotor mit einem Stator und einem Rotor sowie einem rotierbar angeordneten Maschinenelement besonders zuverlässig auszugestalten und gleichzeitig eine möglichst einfache und kostengünstige Serienfertigung zu ermöglichen.

Erfindungsgemäß wird hierfür ein Elektromotor mit einem Stator, einem Rotor und einem mittels des Rotors rotierbar angeordnetem ersten Maschinenelement zur Betätigung eines zweiten Maschinenelements vorgeschlagen, wobei der Elektromotor zur Aufnahme des Stators eine Statoraufnahmeeinheit und zur Aufnahme des Rotors eine Rotoraufnahmeeinheit aufweist.

Bevorzugterweise ist der Elektromotor als Außenläufermotor ausgebildet. Des Weiteren ist bevorzugterweise vorgesehen, dass der Elektromotor als Schrittmotor, beispielsweise zur Betätigung einer Türbetätigungsvorrichtung (Türöffnungs- und/oder Türschließvorrichtung) vorgesehen.

Die Aufnahmeeinheiten, nämlich die Statoraufnahmeeinheit und die Rotoraufnahmeeinheit, dienen zur Aufnahme des Stators bzw. Rotors in der Aufnahmeeinheit, auf der Aufnahmeeinheit oder um die Aufnahmeeinheit herum. Mittels der Aufnahmeeinheiten kann der Stator bzw. Rotor im Elektromotor fixiert und befestigt werden. Durch das Vorsehen separater Aufnahmeeinheiten für den Stator und den Rotor kann sowohl der Stator sowie auch der Rotor besonders präzise im Elektromotor angeordnet werden. Des Weiteren kann hiermit die Fertigung des erfindungsgemäßen Elektromotors vereinfacht und besonders kostengünstig ausgestaltet werden. Insbesondere wird hierdurch die Automatisierbarkeit des Herstellungsverfahrens weiter vereinfacht.

Bevorzugterweise weist der Stator mehrere umfänglich verteilte Statorzähne zur Aufnahme der einzelnen Wicklungen auf. Dabei sind die Wicklungen um die Statorzähne herum gewickelt beziehungsweise auf die Statorzähne gewickelt. Beispielsweise kann der Stator mehr als 8, mehr als 12, mehr als 16, mehr als 20 sowie besonders bevorzugterweise genau 24 umfänglich verteilte Statorzähne aufweisen. Der Rotor weist bevorzugterweise mehrere Permanentmagnete oder segmentierte Permanentmagnete auf, welche umfänglich um den Stator herum angeordnet sind. Beispielsweise kann der Rotor genau 24 Permanentmagnete aufweisen.

Der Rotor weist bevorzugterweise eine Permanentmagnetaufnahmeeinheit zur Aufnahme von mehreren Permanentmagneten auf. Dabei ist die Permanentmagnetaufnahmeeinheit bevorzugterweise im Wesentlichen ringförmig ausgebildet. Die mehreren Permanentmagnete können umfänglich verteilt und am Ring angeordnet sein. Beispielsweise können die einzelnen Permanentmagnete jeweils mit einer Seitenkante, bevorzugterweise ausschließlich mit einer Seitenkante, an der ringförmig ausgebildeten Permanentmagnetaufnahmeeinheit angeordnet sein. Bevorzugterweise sind die Permanentmagnete plattenförmig ausgebildet, wobei diese eine Krümmung entsprechend der Krümmung der ringförmig ausgebildeten Permanentmagnetaufnahmeeinheit aufweisen können. Ferner ist bevorzugterweise vorgesehen, dass die Dicke der Permanentmagnete im Wesentlichen der Dicke der ringförmigen Permanentmagnetaufnahmeeinheit entspricht. Die Permanentmagnetaufnahmeeinheit ist bevorzugterweise aus einem elektrisch und magnetisch isolierendem Material ausgebildet.

Bevorzugterweise weist die Permanentmagnetaufnahmeeinheit Abstandshalter für die einzelnen Permanentmagnete auf. Dabei können die Abstandshalter im Wesentlichen stegförmig ausgebildet sein und von der Permanentmagnetaufnahmeeinheit abstehen. Beispielsweise können die Abstandshalter stegförmig von einer ringförmig ausgebildeten Permanentmagnetaufnahmeeinheit abstehen. Ferner sind die Abstandshalter in axialer Ausrichtung zum Stator und Rotor angeordnet, wobei jeweils zwischen zwei Permanentmagneten ein Abstandshalter vorgesehen ist. Die stegförmig ausgebildeten Abstandshalter können, wie auch die Permanentmagnete, an einer stirnseitigen Kante der ringförmigen Permanentmagnetaufnahmeeinheit angeordnet sein und in axialer Richtung abstehen. Bevorzugterweise weisen die Abstandshalter im Wesentlichen dieselbe Länge auf wie die Permanentmagnete, bzw. wie die axiale Ausdehnung der Permanentmagnete. Die Abstandshalter dienen dazu, den Bereich zwischen zwei Permanentmagneten zu isolieren und einen Abstand zu definieren. Jeder Abstandshalter ist mit einer Seitenkante eines Permanentmagnets sowie einer Seitenkante eines weiteren Permanentmagnets verbunden. Des Weiteren dienen die Abstandshalter zur präzisen Ausrichtung der einzelnen Permanentmagnete.

Bevorzugterweise ist die Permanentmagnetaufnahmeeinheit in der Rotoraufnahmeeinheit angeordnet. Dabei ist die Permanentmagnetaufnahmeeinheit besonders bevorzugterweise vollständig innerhalb der Rotoraufnahmeeinheit angeordnet. Entlang einer umlaufenden inneren Kante der Rotoraufnahmeeinheit kann die Permanentmagnetaufnahmeeinheit derart angeordnet sein, dass diese mit zwei inneren Seitenflächen der Rotoraufnahmeeinheit in Kontakt steht. Eine dieser beiden inneren Seitenflächen der Rotoraufnahmeeinheit kann beispielsweise die innere Seitenfläche einer stirnseitigen Wand und die andere innere Seitenfläche die innere Seitenfläche des umlaufenden Mantels sein.

Die Rotoraufnahmeeinheit weist bevorzugterweise die Form eines Zylinderausschnitts auf. Dabei ist die Deckfläche der zylinderausschnittsförmigen Rotoraufnahmeeinheit im Wesentlichen geschlossen ausgebildet und radial ausgerichtet, bzw. senkrecht zur axialen Richtung von Rotor und Stator angeordnet. Die zylinderausschnittsförmige Rotoraufnahmeeinheit weist bevorzugterweise keine Grundfläche auf bzw. ist unten abgeschnitten. Des Weiteren ist die Rotoraufnahmeeinheit bevorzugterweise innen hohl ausgebildet. Die Mantelfläche der zylinderausschnittsförmigen Rotoraufnahmeeinheit erstreckt sich umlaufend sowie in axialer Richtung. Des Weiteren ist die Mantelfläche bevorzugterweise parallel zu den Permanentmagneten, beispielsweise den plattenförmigen Permanentmagneten, ausgerichtet. Die Rotoraufnahmeeinheit in Form eines Zylinderausschnittes dient ferner als Abdeckung, bzw. Deckel des Elektromotors bzw. des Rotors.

Außerdem ist bevorzugterweise vorgesehen, dass die Rotoraufnahmeeinheit eine im Wesentlichen zentral angeordnete Durchbrechung aufweist, wobei in der Durchbrechung das erste Maschinenelement angeordnet sein kann. Dabei ist bevorzugterweise vorgesehen, dass das erste Maschinenelement teilweise innerhalb der Durchbrechung angeordnet ist. Bevorzugterweise steht das erste Maschinenelement sowohl nach außen sowie auch nach innen (zum Stator hin) aus der Durchbrechung hervor. Die Durchbrechung kann eine teilweise nach innen ragende und parallel zur Mantelfläche der Rotoraufnahmeeinheit angeordnete Anlagefläche zur Anlage des ersten Maschinenelements aufweisen.

Bevorzugterweise weist die Durchbrechung eine im Wesentlichen runde oder polygonale, insbesondere hexagonale, Form auf. Ferner ist bevorzugterweise vorgesehen, dass die Durchbrechung eine, besonders bevorzugterweise mehrere, nach außen gerichtete Ausnehmungen aufweist. Die nach außen gerichteten Ausnehmungen sind radial nach außen, das heißt auf einer Ebene senkrecht zur axialen Richtung angeordnet. Hierunter ist zu verstehen, dass die Ausnehmung in radialer Richtung nach außen gerichtet ist und nicht die Dicke einer Wand der Rotoraufnahmeeinheit verringert. Die nach außen gerichtete Ausnehmung bzw. die nach außen gerichteten Ausnehmungen erweitern bzw. vergrößern bereichsweise den Durchmesser oder die Breite der Durchbrechung. Bevorzugterweise sind die nach außen gerichteten Ausnehmungen umfänglich gleichmäßig verteilt sowie in gleichen Abständen zueinander angeordnet. Besonders bevorzugterweise sind genau drei nach außen gerichtete Ausnehmungen vorgesehen. Die Durchbrechung mit den nach außen gerichteten Ausnehmungen dient zur Aufnahme einer korrespondierenden Form des ersten Maschinenelements. Hierfür ist zumindest bereichsweise bzw. abschnittsweise das erste Maschinenelement mit einer korrespondierenden Form ausgebildet.

Bevorzugterweise ist das erste Maschinenelement als eine auf einer Welle angeordnete Nabe ausgebildet. Die Nabe weist eine zentrale bzw. mittige Bohrung zur Aufnahme der Welle auf. Das erste Maschinenelement ist somit bevorzugterweise auf eine Welle aufgeschoben bzw. auf einer Welle gelagert und mit dieser verbunden. Bevorzugterweise steht die Welle zumindest über eine stirnseitige Seite der Nabe hervor. Die Welle ragt bevorzugterweise in die Statoraufnahmeeinheit zumindest teilweise hinein.

Das erste Maschinenelement weist bevorzugterweise mehrere in axialer Richtung hintereinander angeordnete Abschnitte mit teilweise unterschiedlichen Durchmessern und/oder unterschiedlichen Breiten auf. Besonders bevorzugterweise weist das erste Maschinenelement mindestens drei, sowie ganz besonders bevorzugterweise genau drei, Abschnitte mit bereichsweise unterschiedlichen Durchmessern und/oder unterschiedlichen Breiten auf.

Das erste Maschinenelement ragt bevorzugterweise mit einem ersten Abschnitt aus einer Durchbrechung durch die Rotoraufnahmeeinheit nach außen hinaus. Ferner ist bevorzugterweise das erste Maschinenelement zahnradförmig bzw. ein erster Abschnitt des ersten Maschinenelements zahnradförmig ausgebildet. Der erste Abschnitt weist bevorzugterweise den größten Durchmesser des ersten Maschinenelements auf. Nach außen gerichtete Zähne des zahnradförmigen ersten Abschnitts dienen zur Betätigung des zweiten Maschinenelements. Somit kann der erste Abschnitt des ersten Maschinenelements beispielsweise in Form eines Stirnrads ausgebildet bzw. auf dem Umfang verzahnt sein. Das zweite Maschinenelement, welches durch das erste Maschinenelement betätigt wird, kann ebenfalls zahnradförmig oder als Zahnstange oder Schnecke (gewindeförmig auf einer Welle angeordnet zur Ausbildung eines Schneckenantriebs) ausgebildet sein.

Bevorzugterweise ist ein zweiter Abschnitt des ersten Maschinenelements bereichsweise innerhalb einer Durchbrechung durch die Rotoraufnahmeeinheit angeordnet. Dabei ist besonders bevorzugterweise vorgesehen, dass der zweite Abschnitt an den nach außen durch die Durchbrechung hinausragenden ersten Abschnitt angrenzt bzw. daran direkt anschließt. Das erste Maschinenelement ist im Bereich des zweiten Abschnitts bevorzugterweise formschlüssig mit der Rotoraufnahmeeinheit innerhalb der Durchbrechung angeordnet. Ferner weist der zweite Abschnitt einen kleineren Durchmesser bzw. eine kleinere maximale Breite als der maximale Außendurchmesser des ersten Abschnitts auf.

Der zweite Abschnitt weist bevorzugterweise eine im Wesentlichen zylindrische oder polygonale, insbesondere hexagonale, Form auf. Der zweite Abschnitt kann beispielsweise eine mit der Form der Durchbrechung durch die Rotoraufnahmeeinheit korrespondierende Form aufweisen.

Auch ist bevorzugterweise vorgesehen, dass der zweite Abschnitt umfänglich angeordnete nach außen abstehende Erhebungen aufweist. Die nach außen stehenden Erhebungen sind dabei bevorzugterweise in radialer Richtung nach außen abstehend. Somit erweitern bzw. vergrößern die nach außen abstehenden Erhebungen bereichsweise den Durchmesser bzw. die Breite des zweiten Abschnitts. Besonders bevorzugterweise sind die nach außen abstehenden Erhebungen umfänglich gleichmäßig verteilt und in gleichen Abständen angeordnet. Ganz besonders bevorzugterweise sind genau drei Erhebungen vorgesehen. Somit weist der zweite Abschnitt eine Form zum Einsetzen in eine korrespondierende Form der Durchbrechung auf. Besonders bevorzugterweise sind die Erhebungen vollständig innerhalb der Durchbrechung durch die Rotoraufnahmeeinheit angeordnet.

Der zweite Abschnitt weist bevorzugterweise in umfänglicher und/oder in axialer Richtung mindestens zwei unterschiedlich große Durchmesser oder Breiten auf. Hierfür sind die nach außen stehenden Erhebungen nur bereichsweise sowie umfänglich verteilt angeordnet. In axialer Richtung sind die Erhebungen bevorzugterweise nicht über die gesamte Länge des zweiten Abschnittes angeordnet. Im Bereich der Erhebungen weist der zweite Abschnitt somit einen größten Durchmesser bzw. eine größte Breite auf. Da die Erhebungen bevorzugterweise umfänglich beabstandet zueinander sind, ist der Durchmesser bzw. die Breite umfänglich betrachtet unterschiedlich. Da die Erhebungen in axialer Richtung nicht über die gesamte Länge des zweiten Abschnitts angeordnet sind, weist der zweite Abschnitt auch in axialer Richtung bevorzugterweise unterschiedlich große Durchmesser bzw. Breiten auf.

Bevorzugterweise ragt das erste Maschinenelement mit einem dritten Abschnitt aus einer Durchbrechung durch die Rotoraufnahmeeinheit hinaus und ist zum Stator hin gerichtet angeordnet. Somit ist bevorzugterweise vorgesehen, dass das erste Maschinenelement mit dessen dritten Abschnitt ins Innere des Elektromotors hineinragt. Beispielsweise kann der dritte Abschnitt in eine Ausnehmung der Statoraufnahmeeinheit hineinragen.

Bevorzugterweise ist der dritte Abschnitt im Wesentlichen zylinderförmig ausgebildet. Ferner weist der dritte Abschnitt bevorzugterweise eine umlaufende rillenförmige Ausnehmung auf. Auch ist bevorzugterweise vorgesehen, dass der dritte Abschnitt kleiner als der minimale Durchmesser oder die minimale Breite des zweiten und des ersten Abschnitts ist.

Die Welle, auf welche ein bevorzugterweise als Nabe ausgebildetes erstes Maschinenelement aufgesetzt ist, ist bevorzugterweise über die gesamte Länge des ersten Maschinenelements innerhalb des ersten Maschinenelements angeordnet. Mit einem stirnseitigen Ende ragt die Welle ferner bevorzugterweise stirnseitig aus dem ersten Maschinenelement hinaus bzw. steht stirnseitig über das erste Maschinenelement über. Im Bereich des stirnseitigen Endes der Welle weist die Welle außerdem bevorzugterweise einen erweiterten Durchmesser auf. Hierdurch wird ein Kopfbereich der Welle ausgebildet. Der Kopfbereich bzw. Endbereich der Welle kann zylinderförmig mit einem größeren Durchmesser im Vergleich zum innerhalb des ersten Maschinenelements angeordneten Teil der Welle ausgebildet sein. Ferner könnte das stirnseitige Ende der Welle abgerundet, beispielsweise halbkugelförmig ausgebildet sein.

Auch ist bevorzugterweise vorgesehen, dass die Welle mit dem stirnseitigen Ende im Bereich des erweiterten Durchmessers in einer Ausnehmung der Statoraufnahmeeinheit angeordnet ist.

Der Stator ist bevorzugterweise auf der Statoraufnahmeeinheit und/oder um die Statoraufnahmeeinheit herum angeordnet sowie mit der Statoraufnahmeeinheit fest verbunden. Beispielsweise kann der Stator mit der Statoraufnahmeeinheit verschraubt sein.

Die Statoraufnahmeeinheit ist bevorzugterweise zumindest bereichsweise innerhalb eines Innenrings des Stators angeordnet. Um den Innenring herum sind die Statorzähne in radialer Richtung von dem Ring abstehend angeordnet. Am Innenring sind ferner bevorzugterweise Ausnehmungen oder Bohrungen zur Aufnahme von Schraubverbindungen vorgesehen, welche zum Verschrauben des Stators mit der Statoraufnahmeeinheit dienen.

Die Statoraufnahmeeinheit weist bevorzugterweise umfänglich angeordnete Ausnehmungen auf, in welche korrespondierende Gegenstücke des Stators, insbesondere eines Innenrings des Stators, hineinragen. Die Ausnehmungen und Gegenstücke sind hierfür besonders bevorzugterweise abgerundet ausgebildet.

Ferner weist die Statoraufnahmeeinheit bevorzugterweise eine Ausnehmung in radialer Richtung auf. In diese Ausnehmung kann das erste Maschinenelement und/oder ein stirnseitiges Ende einer Welle, auf welcher das erste Maschinenelement angeordnet ist, hineinragen. Die Ausnehmung ist hierfür bevorzugterweise im Wesentlichen rund ausgebildet. Ferner ist die Ausnehmung vorzugsweise zentral beziehungsweise mittig in einer Erhebung der Statoraufnahmeeinheit angeordnet.

Auch ist bevorzugterweise vorgesehen, dass die Ausnehmung in der Statoraufnahmeeinheit in axialer Richtung unterschiedlich tief ausgebildet ist. Ein erster Bereich weist dabei eine größte Tiefe auf und ist mittig angeordnet. Ein zweiter Bereich kann eine geringere Tiefe aufweisen und ist bevorzugterweise um den ersten Bereich herum angeordnet. Somit ist bevorzugterweise vorgesehen, dass der zweite Bereich ringförmig um den ersten Bereich herum mit einer geringeren Tiefe angeordnet ist. Der Übergangsbereich zwischen den beiden Bereichen mit unterschiedlichen Tiefen ist besonders bevorzugterweise stufenförmig ausgebildet. Ein stirnseitiges Ende der Welle, insbesondere ein im Durchmesser erweitertes stirnseitiges Ende der Welle, kann in den ersten Bereich bzw. in den Bereich mit größerer Tiefe hineinragen. Ein stirnseitiges Ende des als Nabe ausgebildeten ersten Maschinenelements kann in den zweiten Bereich hineinragen.

Der Elektromotor weist ferner bevorzugterweise eine Platine mit mindestens einem elektrischen Anschlussmittel auf. Die Platine ist bevorzugterweise mit der Statoraufnahmeeinheit fest verbunden, beispielsweise verschraubt. Hierfür kann die Platine auf einer plattenförmigen Grundplatte der Statoraufnahmeeinheit angeordnet sein.

Erfindungsgemäß ist ferner ein Haushaltsgerät mit einer Tür und einer Türbetätigungsvorrichtung (Türöffnungs- und/oder Türschließvorrichtung) vorgesehen. Die Türbetätigungsvorrichtung weist einen vorbeschriebenen Elektromotor auf. Beispielsweise kann das Haushaltsgerät ein Kühlschrank oder Tiefkühlschrank sein. Die Tür des Kühlschranks muss keinen Griff aufweisen. Durch Ausübung eines Drucks auf die Kühlschranktür kann mittels einer Druckmesseinrichtung erkannt werden, dass die Tür geöffnet werden soll und der Elektromotor aktiviert wird. Der Rotor bringt das erste Maschinenelement, beispielsweise die Nabe mit einem zahnradförmigen Abschnitt, um einen definierten Wickel in Drehbewegung und betätigt dabei ein weiteres Maschinenelement, welches die Kühlschranktür öffnet. Bei entgegengesetzter Drehbewegung kann die Kühlschranktür wieder geschlossen werden.

### Kurze Beschreibung der Zeichnungen

Die Erfindung wird im Folgenden anhand bevorzugter Ausführungsformen beispielhaft erläutert.

Es zeigen schematisch:
- Fig. 1: eine perspektivische Ansicht eines Elektromotors;
- Fig. 2: eine Querschnittsdarstellung eines Elektromotors;
- Fig. 3: eine Explosionsdarstellung eines Elektromotors;
- Fig. 4: eine perspektivische Ansicht eines Elektromotors;
- Fig. 5a bis b: eine Seitenansicht und eine perspektivische Ansicht eines ersten Maschinenelements;
- Fig. 6: eine perspektivische Ansicht einer Rotoraufnahmeeinheit; und
- Fig. 7: eine perspektivische Ansicht einer Statoraufnahmeeinheit.

### Bevorzugte Ausführungsformen der Erfindung

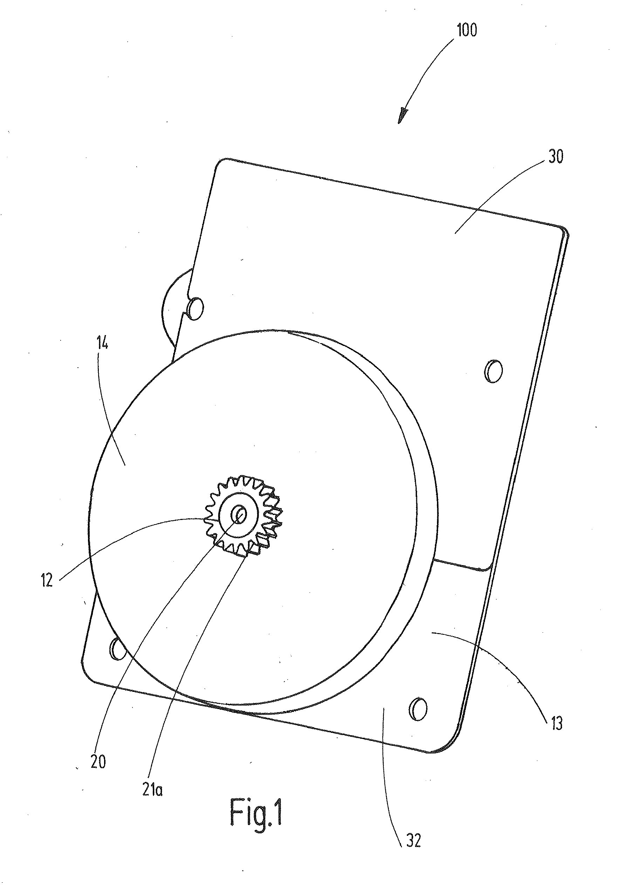

Fig. 1 zeigt eine perspektivische Ansicht eines Elektromotors 100 mit einer Statoraufnahmeeinheit 13 und einer Rotoraufnahmeeinheit 14. Die Statoraufnahmeeinheit 13 weist eine Grundplatte 32 auf, auf welcher eine Platine 30 mit einem elektrischen Anschlussmittel 31 (in Fig. 1 nicht dargestellt) angeordnet ist. Der Stator 10 sowie auch der Rotor 11 sind in Fig. 1 nicht gezeigt, da diese von der Rotoraufnahmeeinheit 14 verdeckt sind. Die Rotoraufnahmeeinheit 14 dient zur Aufnahme des Rotors 11 und weist die Form eines Deckels bzw. eines Zylinderausschnitts auf.

Durch die Rotoraufnahmeeinheit 14 ist eine Durchbrechung 18 angeordnet, durch welche das erste Maschinenelement 12 hindurchragt bzw. in welcher das erste Maschinenelement 12 angeordnet ist. Das erste Maschinenelement 12 weist einen ersten Abschnitt 21a auf, welcher zahnradförmig ausgebildet ist und zum Antrieb bzw. zur Betätigung eines zweiten Maschinenelements 212 (in Fig. 1 nicht gezeigt) dient. Durch die Betätigung eines zweiten Maschinenelements 212 kann beispielsweise eine Türbetätigungsvorrichtung betätigt werden.

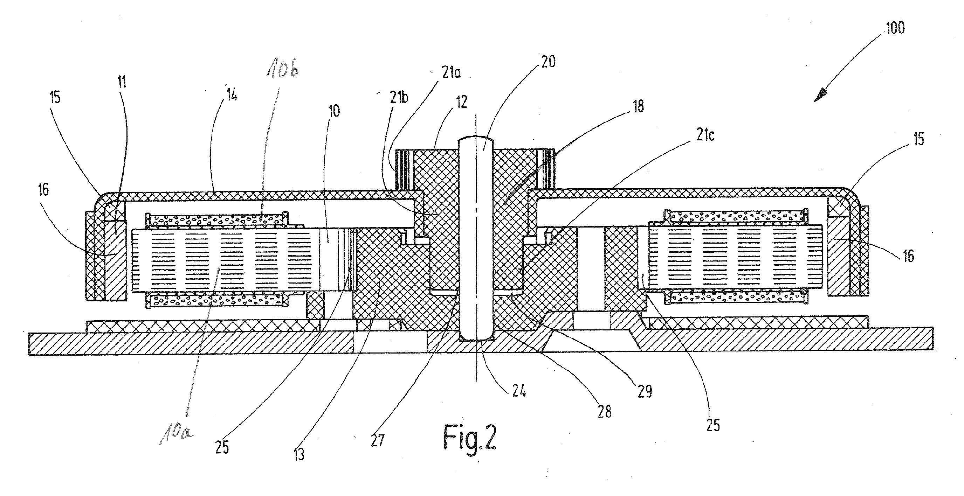

Fig. 2 zeigt eine Schnittdarstellung durch den Elektromotor 100 aus Fig. 1. Das erste Maschinenelement 12 weist drei Abschnitte 21a, 21b, 21c mit unterschiedlichen Durchmessern auf. Das erste Maschinenelement ist als eine auf einer Welle 20 gelagerte bzw. angeordnete Nabe ausgebildet. Das erste Maschinenelement 12 ragt mit einem ersten Abschnitt 21a aus der Durchbrechung 18 nach außen hinaus. Der zweite Abschnitt 21b des ersten Maschinenelements 12 ist innerhalb der Durchbrechung 18 durch die Rotoraufnahmeeinheit 14 angeordnet. Der dritte Abschnitt 21c des ersten Maschinenelements 12 ragt aus der Durchbrechung 18 nach innen bzw. zum Stator 10 hin hinaus.

Die Rotoraufnahmeeinheit 14 weist im Wesentlichen die Form eines Zylinderausschnitts auf und ist im Inneren hohl ausgebildet. Umfänglich an der Innenwand der Rotoraufnahmeeinheit 14 ist die Permanentmagnetaufnahmeeinheit 15 mit den Permanentmagneten 16 angeordnet. Der Rotor 11 mit der Permanentmagnetaufnahmeeinheit 15 und den Permanentmagneten 16 ist derart mit der Rotoraufnahmeeinheit 14 verbunden, dass die Rotoraufnahmeeinheit 14 zusammen mit dem Rotor 11 rotierbar ist. Das erste Maschinenelement 12 ist ebenfalls fest mit der Rotoraufnahmeeinheit 14 verbunden, so dass das erste Maschinenelement 12 mit dem Rotor 11 bzw. der Rotoraufnahmeeinheit 14 rotierbar ist.

Der Stator 10 weist mehrere umfänglich verteilt angeordnete Statorzähne 10a auf, auf welchen die einzelnen Wicklungen 10b angeordnet sind. Der Stator 10 ist mit einer Statoraufnahmeeinheit 13 fest verbunden. Die Statoraufnahmeeinheit 13 weist eine Ausnehmung 27 mit Bereichen 28, 29 unterschiedlicher Tiefe auf. Ein erster Bereich 28 der Ausnehmung 27 ist dabei mittig angeordnet und weist eine im Wesentlichen runde Form zur Aufnahme eines stirnseitigen Endes 24 der Welle 20 auf. Um den ersten Bereich 28 herum ist ein zweiter Bereich 29 mit etwas geringerer Tiefe zur Aufnahme des stirnseitigen Endes des ersten Maschinenelements 12 bzw. zur Aufnahme des dritten Abschnitts 21c des ersten Maschinenelements 12 angeordnet. Somit ist der dritte Abschnitt 21c zumindest bereichsweise in der Ausnehmung 27 der Statoraufnahmeeinheit 13 angeordnet.

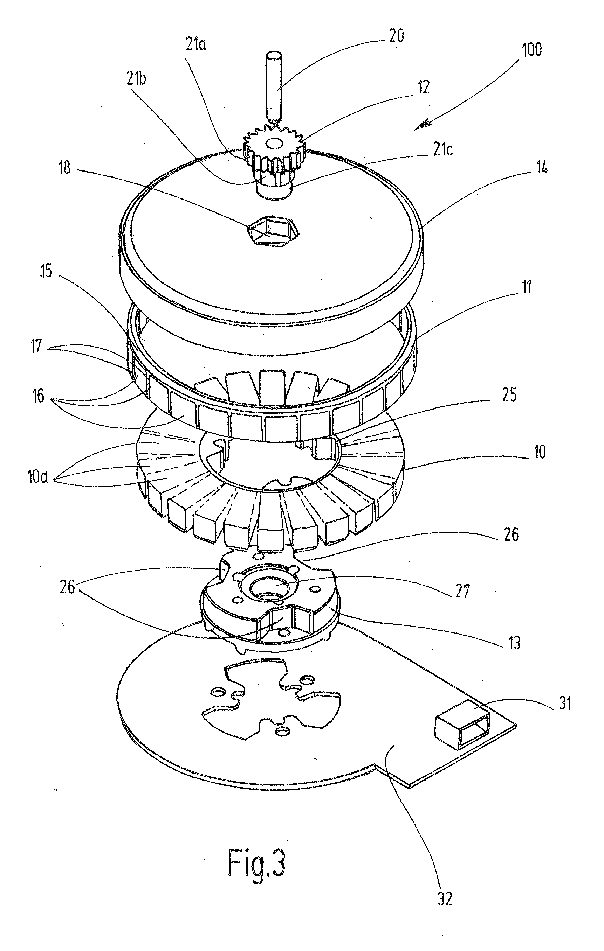

Fig. 3 zeigt den Elektromotor 100 aus Fig. 1 und 2 in Explosionsdarstellung. Aus Fig. 3 geht nochmals deutlich hervor, dass der Stator 10 mehrere, nämlich 24, Statorzähne 10a aufweist. Die Statorzähne 10a sind umfänglich um einen Innenring 25 des Stators 10 verteilt angeordnet. Der Stator 10 weist im Bereich des Innenrings 25 eine der Statoraufnahmeeinheit 13 korrespondierende Form auf. Somit kann der Stator 10 auf die Statoraufnahmeeinheit 13 sowie bereichsweise um die Statoraufnahmeeinheit 13 herum angeordnet und mit dieser fest verbunden werden. Die Statoraufnahmeeinheit 13 weist ferner eine Grundplatte 32 mit einer Platine 30 und einem elektrischen Anschlussmittel 31 auf.

Um den Stator 10 herum ist die Permanentmagnetaufnahmeeinheit 15 mit den Permanentmagneten 16 ringförmig angeordnet. Die einzelnen Permanentmagnete 16 sind durch die Abstandshalter 17 voneinander getrennt angeordnet. Die Durchbrechung 18 durch die Rotoraufnahmeeinheit 14 ist polygonal, nämlich hexagonal, ausgebildet. Der zweite Abschnitt 21b des ersten Maschinenelements 12 weist dementsprechend eine korrespondierende Form, nämlich ebenfalls eine hexagonale Form, auf.

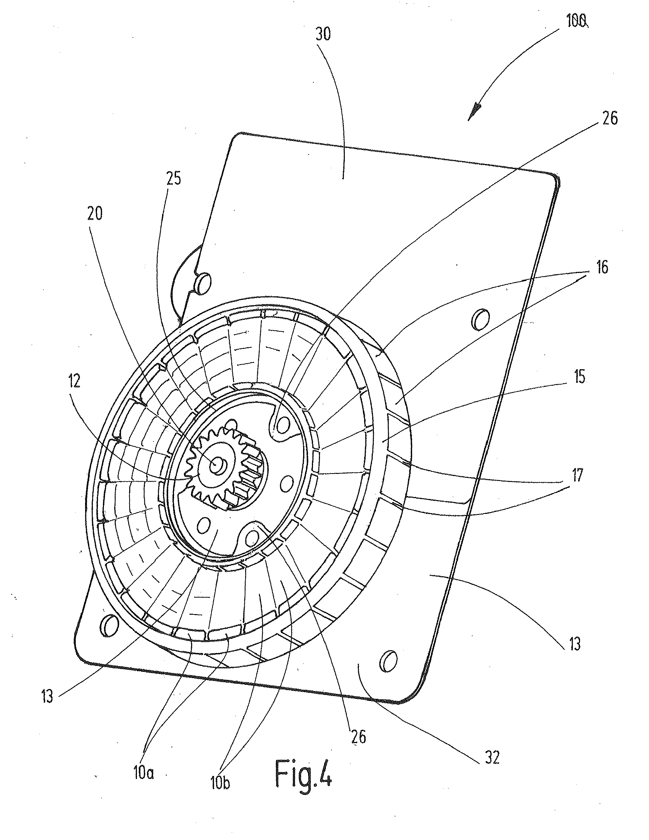

Fig. 4 zeigt eine perspektivische Ansicht des Elektromotors 100 aus den Fig. 1 bis 3. Dabei ist in Fig. 4 die Rotoraufnahmeeinheit 14 entfernt. Fig. 4 zeigt somit eine teilweise Innenansicht des Elektromotors 100. Der Stator 10 ist auf der Statoraufnahmeeinheit 13 sowie mit dem Innenring 25 des Stators 10 bereichsweise um die Statoraufnahmeeinheit 13 herum angeordnet. Der Innenring 25 des Stators 10 weist nach innen und radial gerichtete Erhebungen bzw. zu den umfänglich um die Statoraufnahmeeinheit 13 herum angeordneten Ausnehmungen 26 korrespondierende Gegenstücke 26a auf. Zur Aufnahme dieser Erhebungen sind an der Statoraufnahmeeinheit 13 bereichsweise umfänglich angeordnete Ausnehmungen 26 angeordnet.

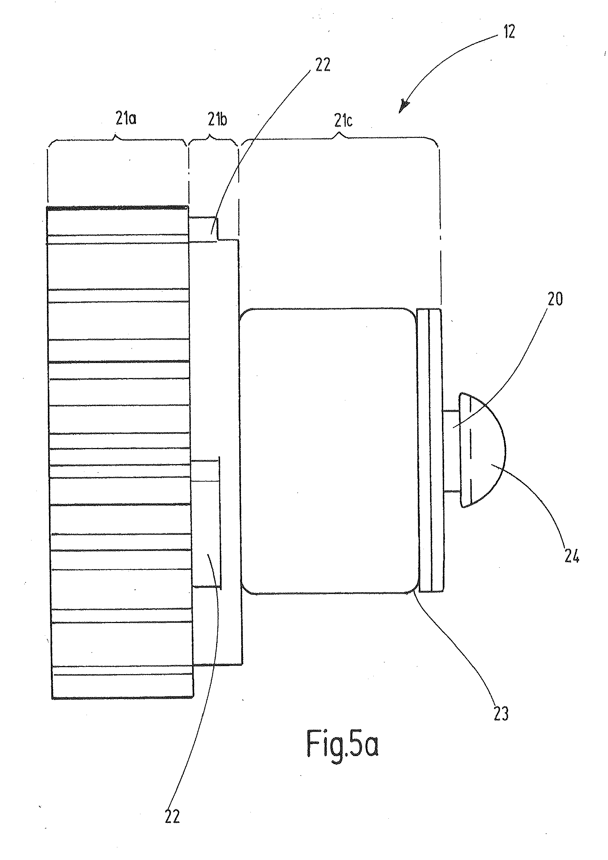

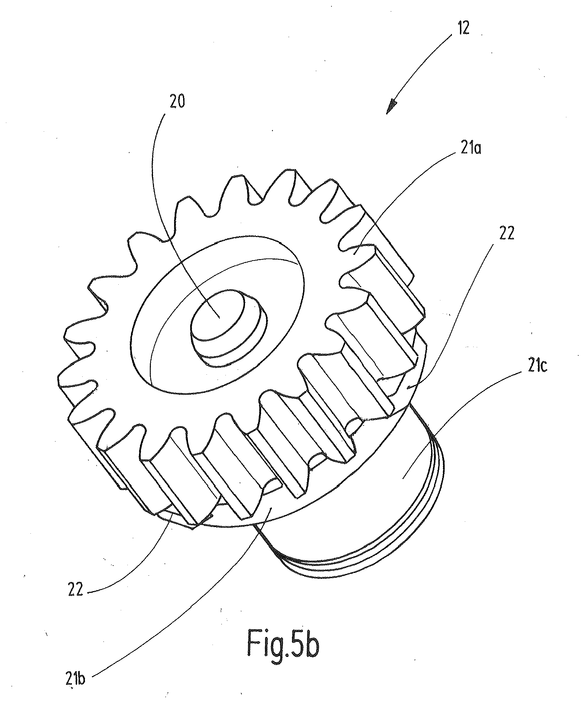

Fig. 5a und 5b zeigen eine Seitenansicht sowie eine perspektivische Ansicht des ersten Maschinenelements 12. Das erste Maschinenelement 12 ist als Nabe ausgebildet und auf einer Welle 20 angeordnet. Das erste Maschinenelement 12 weist in Längsrichtung bzw. axialer Richtung drei Abschnitte 21a, 21b, 21c auf. Der erste Abschnitt 21a ist zahnradförmig ausgebildet bzw. weist nach außen gerichtete Zähne auf. Der erste Abschnitt 21a weist den größten Außendurchmesser auf. Der zweite Abschnitt 21b weist einen kleineren maximalen Durchmesser bzw. eine kleinere maximale Breite als der erste Abschnitt 21a auf. Der zweite Abschnitt 21b ist im Wesentlichen zylinderförmig ausgebildet. Umfänglich um den zweiten Abschnitt 21b herum sind abschnittsweise Erhebungen 22 angeordnet. Die Erhebungen sind dabei beabstandet zueinander und in gleichen Abständen zueinander angeordnet. Insgesamt sind drei Erhebungen 22 umfänglich verteilt um den Umfang des zweiten Abschnitts 21b des ersten Maschinenelements 12 angeordnet. Die Erhebungen 22 erstrecken sich in axialer Richtung nicht über die gesamte Länge des zweiten Abschnitts 21b. An den zweiten Abschnitt 21b schließt der dritte Abschnitt 21c mit geringerem Außendurchmesser an. Im Bereich des stirnseitigen Endes des dritten Abschnitts 21c weist das erste Maschinenelement 12 eine vollumfänglich angeordnete rillenförmige Ausnehmung 23 auf. Die Welle 20 ragt mit einem stirnseitigen Ende 24 aus dem ersten Maschinenelement 12 heraus. Bereichsweise ist die Welle 20 in diesem Bereich mit einem vergrößerten Außendurchmesser ausgebildet, wodurch ein Kopf der Welle 20 gebildet wird. Dieser Bereich ist halbkugelförmig ausgebildet.

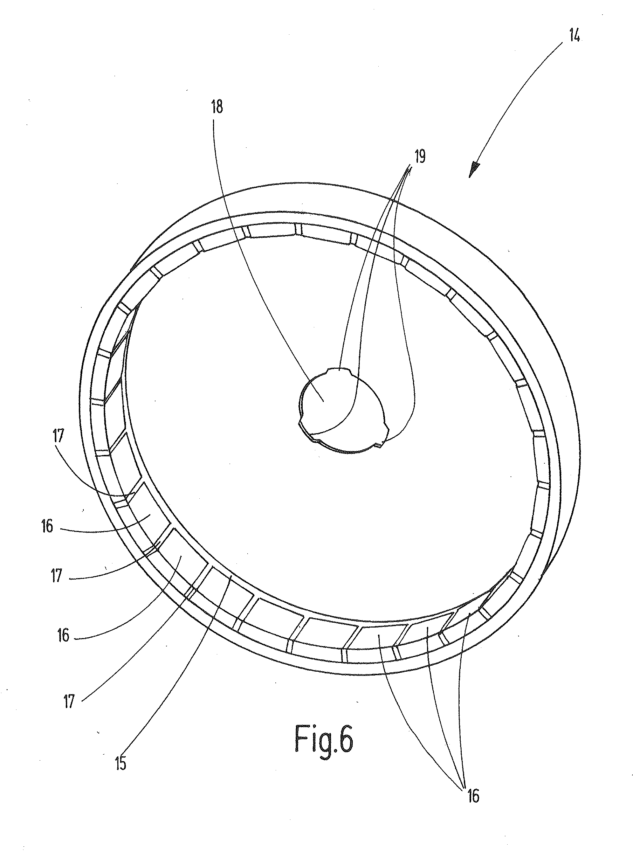

Fig. 6 zeigt eine perspektivische Ansicht der Rotoraufnahmeeinheit 14 mit im Inneren der Rotoraufnahmeeinheit 14 angeordneten Permanentmagnetaufnahmeeinheit 15. Die Permanentmagnetaufnahmeeinheit 15 ist ringförmig ausgebildet und liegt an einer umlaufenden Kante der zylinderausschnittsförmigen Rotoraufnahmeeinheit 14 an. Die einzelnen Permanentmagnete 16 sind zwischen den Abstandshaltern 17 der Permanentmagnetaufnahmeeinheit 15 angeordnet und liegen umfänglich an der Innenwand des Mantels der Rotoraufnahmeeinheit 14 an. Die Rotoraufnahmeeinheit 14 weist eine zentral angeordnete Durchbrechung 18 auf. Die Durchbrechung 18 ist im Wesentlichen rund ausgebildet und weist umfänglich verteilte nach außen gerichtete Ausnehmungen 19 auf. Die Ausnehmungen 19 dienen zur Aufnahme der umfänglich verteilten Erhebungen 22 im Bereich des zweiten Abschnitts 21b des ersten Maschinenelements 12.

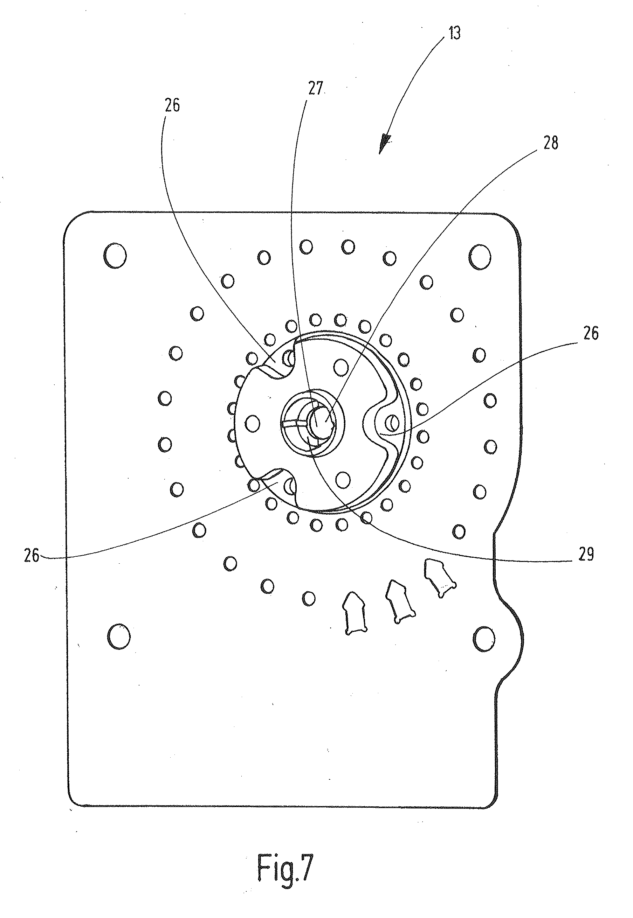

Fig. 7 zeigt eine perspektivische Ansicht der Statoraufnahmeeinheit 13 mit Grundplatte 32. Dabei kann die Grundplatte 32 Bestandteil der Statoraufnahmeeinheit 13 oder separat ausgebildet sein. Zur Aufnahme des Stators 10 weist die Statoraufnahmeeinheit 13 eine Erhebung auf, um welche der Stator 10 herum angeordnet werden kann. Im Bereich dieser Erhebung ist mittig eine Ausnehmung 27 mit zwei Bereichen 28, 29 unterschiedlicher Tiefe ausgebildet. Der erste Bereich 28 mit größerer Tiefe ist dabei mittig angeordnet und dient zur Aufnahme des stirnseitigen Endes 24 der Welle 20. Der zweite Bereich 29 mit geringerer Tiefe ist um den ersten Bereich 28 herum angeordnet und dient zur Aufnahme des stirnseitigen Endes des ersten Maschinenelements 12, wodurch das erste Maschinenelement 12 mit dem dritten Abschnitt 21c zumindest bereichsweise in der Ausnehmung 27 angeordnet ist. Des Weiteren weist die Statoraufnahmeeinheit 13 Bohrungen zur Aufnahme von Schraubverbindungen für die Verbindung des Stators 10 mit der Statoraufnahmeeinheit 13 auf.

### Bezugszeichenliste

- 100: Elektromotor
- 200: Haushaltsgerät

- 10: Stator
- 10a: Statorzähne
- 10b: Wicklungen
- 11: Rotor
- 12: erstes Maschinenelement
- 13: Statoraufnahmeeinheit
- 14: Rotoraufnahmeeinheit
- 15: Permanentmagnetaufnahmeeinheit
- 16: Permanentmagnet
- 17: Abstandshalter
- 18: Durchbrechung
- 19: Ausnehmungen der Durchbrechung

- 20: Welle
- 21a: erster Abschnitt des ersten Maschinenelements
- 21b: zweiter Abschnitt des ersten Maschinenelements
- 21c: dritter Abschnitt des ersten Maschinenelements
- 22: Erhebungen
- 23: rillenförmige Ausnehmung
- 24: stirnseitiges Ende der Welle
- 25: Innenring des Stators
- 26: umfängliche Ausnehmungen in der Statoraufnahmeeinheit
- 26a: korrespondierende Gegenstücke
- 27: in der Statoraufnahmeeinheit angeordnete Ausnehmung
- 28: erster Bereich der Ausnehmung
- 29: zweiter Bereich der Ausnehmung

- 30: Platine
- 31: elektrisches Anschlussmittel
- 32: Grundplatte

- 210: Tür
- 211: Türbetätigungsvorrichtung
- 212: zweites Maschinenelement

## Patentansprüche

1. Elektromotor (100) aufweisend einen Stator (10), einen Rotor (11), und ein mittels des Rotors (11) rotierbar angeordnetes erstes Maschinenelement (12) zur Betätigung eines zweiten Maschinenelements (212), **dadurch gekennzeichnet,**
**dass** der Elektromotor (100) eine Statoraufnahmeeinheit (13) zur Aufnahme des Stators (10) und eine Rotoraufnahmeeinheit (14) zur Aufnahme des Rotors (11) aufweist.

2. Elektromotor (100) gemäß Anspruch 1,
**dadurch gekennzeichnet,**
**dass** der Rotor (11) eine Permanentmagnetaufnahmeeinheit (15) zur Aufnahme von mehreren Permanentmagneten (16) aufweist, wobei die Permanentmagnetaufnahmeeinheit (15) im Wesentlichen ringförmig ausgebildet ist.

3. Elektromotor (100) gemäß Anspruch 2,
**dadurch gekennzeichnet,**
**dass** die Permanentmagnetaufnahmeeinheit (15) Abstandshalter (17) für die Permanentmagnete (16) aufweist, welche im Wesentlichen stegförmig von der Permanentmagnetaufnahmeeinheit (15) abstehen, und in axialer Ausrichtung zum Stator (10) und Rotor (11) angeordnet sind, und jeweils zwischen zwei Permanentmagneten (16) angeordnet sind;
und / oder dass die Permanentmagnetaufnahmeeinheit (15) in der Rotoraufnahmeeinheit (14) angeordnet ist.

4. Elektromotor (100) gemäß einem der vorhergehenden Ansprüche,
**dadurch gekennzeichnet,**
**dass** die Rotoraufnahmeeinheit (14) die Form eines Zylinderausschnitts aufweist;
und / oder dass die Rotoraufnahmeeinheit (14) eine im Wesentlichen zentral angeordnete Durchbrechung (18) zur Anordnung des ersten Maschinenelements (12) aufweist.

5. Elektromotor (100) gemäß Anspruch 4,
**dadurch gekennzeichnet,**
**dass** die Durchbrechung (18) eine im Wesentlichen runde oder polygonale, insbesondere hexagonale, Form aufweist;
und / oder dass die Durchbrechung (18) nach außen gerichtete Ausnehmungen (19) aufweist.

6. Elektromotor (100) gemäß einem der vorhergehenden Ansprüche,
**dadurch gekennzeichnet,**
**dass** das erste Maschinenelement (12) als eine auf einer Welle (20) angeordnete Nabe ausgebildet ist;
und / oder dass das erste Maschinenelement (12) mehrere in axialer Richtung hintereinander angeordnete Abschnitte (21a, 21b, 21c) mit teilweise unterschiedlichen Durchmessern und/oder Breiten aufweist.

7. Elektromotor (100) gemäß Anspruch 6,
**dadurch gekennzeichnet,**
**dass** das erste Maschinenelement (12) mit einem ersten Abschnitt (21a) aus einer Durchbrechung (18) durch die Rotoraufnahmeeinheit (14) nach außen hinausragt und der ersten Abschnitt (21a) zahnradförmig ausgebildet ist;
und / oder dass ein zweiter Abschnitt (21b) des ersten Maschinenelements (12) zumindest bereichsweise innerhalb einer Durchbrechung (18) durch die Rotoraufnahmeeinheit (14) angeordnet ist.

8. Elektromotor (100) gemäß Anspruch 7,
**dadurch gekennzeichnet,**
**dass** der zweite Abschnitt (21b) eine im Wesentlichen zylindrische oder polygonale, insbesondere hexagonale, Form aufweist;
und / oder dass der zweite Abschnitt (21b) umfänglich angeordnete nach außen gerichtete Erhebungen (22) aufweist;
und / oder dass der zweite Abschnitt (21b) in umfänglicher und/oder in axialer Richtung mindestens zwei unterschiedlich große Durchmesser oder Breiten aufweist.

9. Elektromotor (100) gemäß einem der Ansprüche 6 bis 8,
**dadurch gekennzeichnet,**
**dass** das erste Maschinenelements (12) mit einem dritten Abschnitt (21c) aus einer Durchbrechung (18) durch die Rotoraufnahmeeinheit (14) hinausragt und der dritten Abschnitt (21c) zum Stator (10) hin gerichtet ist, wobei vorzugsweise der dritte Abschnitt (21c) im Wesentlichen zylinderförmig ausgebildet ist und/oder eine umlaufende rillenförmige Ausnehmung (23) aufweist.

10. Elektromotor (100) gemäß einem der Ansprüche 6 bis 9,
**dadurch gekennzeichnet,**
**dass** die Welle (20) über die gesamte Länge des ersten Maschinenelements (12) innerhalb des ersten Maschinenelements (12) angeordnet ist und mit einem stirnseitigen Ende (24) stirnseitig über das erste Maschinenelement (12) hinaussteht, wobei das stirnseitige Ende (24) bevorzugterweise einen erweiterten Durchmesser aufweist, wobei die Welle (20) bevorzugterweise mit dem stirnseitigen Ende (24) in einer Ausnehmung (25) der Statoraufnahmeeinheit (13) angeordnet ist.

11. Elektromotor (100) gemäß einem der vorhergehenden Ansprüche,
**dadurch gekennzeichnet,**
**dass** der Stator (10) auf der Statoraufnahmeeinheit (13) und/oder um die Statoraufnahmeeinheit (13) herum angeordnet ist und mit der Statoraufnahmeeinheit fest verbunden ist;
und / oder dass die Statoraufnahmeeinheit (13) zumindest bereichsweise innerhalb eines Innenrings (25) des Stators (10) angeordnet ist.

12. Elektromotor (100) gemäß einem der vorhergehenden Ansprüche,
**dadurch gekennzeichnet,**
**dass** die Statoraufnahmeeinheit (13) umfänglich angeordnete Ausnehmungen (26) aufweist, in welche korrespondierende Gegenstücke (26a) des Stators (10), insbesondere eines Innenrings (25) des Stators (10), hineinragen.

13. Elektromotor (100) gemäß einem der vorhergehenden Ansprüche,
**dadurch gekennzeichnet,**
**dass** die Statoraufnahmeeinheit (13) eine Ausnehmung (27) aufweist, wobei in die Ausnehmung (27) das erste Maschinenelement (12) und/oder ein stirnseitiges Ende (24) einer Welle (20), auf welcher das erste Maschinenelement (12) angeordnet ist, hineinragt.

14. Elektromotor (100) gemäß Anspruch 13,
**dadurch gekennzeichnet,**
**dass** die Ausnehmung (27) in axialer Richtung unterschiedlich tief ausgebildet ist, wobei ein erster Bereich (28) eine größte Tiefe aufweist und mittig angeordnet ist, und ein zweiter Bereich (29) eine geringere Tiefe aufweist und um den ersten Bereich (28) herum angeordnet ist.

15. Elektromotor (100) gemäß einem der vorhergehenden Ansprüche,
**dadurch gekennzeichnet,**
**dass** der Elektromotor (100) ferner eine Platine (30) mit mindestens einem elektrischen Anschlussmittel (31) aufweist, wobei die Platine (30) mit der Statoraufnahmeeinheit (13) fest verbunden, insbesondere verschraubt, ist.

16. Haushaltsgerät (200), insbesondere ein Kühlschrank, mit einer Tür (210) und einer Türbetätigungsvorrichtung (211),
**dadurch gekennzeichnet,**
**dass** die Türbetätigungsvorrichtung (211) einen Elektromotor (100) gemäß einem der vorhergehenden Ansprüche aufweist.
